(19) Europäisches Patentamt / European Patent Office / Office européen des brevets

(11) **EP 2 261 088 B1**

(12) **EUROPEAN PATENT SPECIFICATION**

(45) Date of publication and mention
of the grant of the patent:
**20.03.2013 Bulletin 2013/12**

(51) Int Cl.:
***B60R 21/0136*** *(2006.01)*

(21) Application number: **09100325.1**

(22) Date of filing: **10.06.2009**

(54) **Method and control device for the classification of a crash of a vehicle**

Verfahren und Steuerungsvorrichtung zur Einstufung eines Aufpralls bei einem Fahrzeug

Procédé et dispositif de contrôle pour la classification de collision d'un véhicule

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010 Bulletin 2010/50**

(73) Proprietors:
• **ROBERT BOSCH GMBH**
**70442 Stuttgart (DE)**
• **Volvo Car Corporation**
**405 31 Göteborg (SE)**

(72) Inventors:
• **Rauh, Christian**
**81377, Muenchen (DE)**
• **Becker, Jens**
**70597, Stuttgart (DE)**
• **Nilsson, Paer**
**41671, Goeteborg (SE)**

• **Lich, Thomas**
**71409, Schwaikheim (DE)**
• **Moldenhauer, Maike**
**71111, Waldenbuch (DE)**
• **Wogel, Anders**
**42470, Olofstorp (SE)**
• **Doerr, Alfons**
**70597, Stuttgart (DE)**
• **Axelsson, Anders**
**42341, Torslanda (SE)**
• **Harda°, Peter**
**41324, Goeteborg (SE)**
• **Rittler, Stephan**
**73660, Urbach (DE)**
• **Hiemer, Marcus**
**88074, Kehlen (DE)**

(56) References cited:
WO-A-2005/036108    DE-C1- 19 632 836
DE-C1- 19 651 123    GB-A- 2 442 987
US-A1- 2003 236 604

EP 2 261 088 B1

## Description

Prior art

The present invention relates to a method according to claim 1, a control device according to claim 12 and a computer program product according to claim 13.

The activation of restraint means in a vehicle crash is generally determined by the crash type and the crash severity. Both the crash type and the crash severity to be expected may be assessed by the combined signal evaluation of acceleration, roll rate and pressure sensors as well as anticipatory sensors (e.g. radar) integrated in the vehicle. The acceleration sensors serve to evaluate the signal waveforms and speed alterations in the longitudinal and lateral directions, the roll rate helps to evaluate the progression of a vehicle rollover movement on the longitudinal axis, with the help of the pressure sensors, planar crash contacts may be rapidly detected, and anticipatory sensors basically serve to detect the crash speed and the crash overlap. The evaluation algorithms as well as the sensor configuration may be designed and applied by means of standardized crash tests.

In standardized crash tests, the combined observation of linear and rotatory alterations of movement has so far been of minor importance for the crash classification, whereas, in the field, the combination of the linear and rotatory alterations of movement may frequently be observed during a crash. If linear and rotatory accelerations are combined in a crash, the application of force to the vehicle during the crash may be of substantial influence on the movement of the vehicle occupant and therefore on the optimum activation of various restraint means. Therefore, a crash type classification should not only be in line with linear alterations of movement but should also account for the application of force with respect to crash induced to yaw, pitch and roll movements.

WO 2008/048159 addresses a vehicle safety system, in which a trigger signal is provided when a lateral acceleration or a rotatory acceleration exceeds a given threshold value.

Furthermore GB 2 442 987 describes a method, and control device, for classification of a crash of a vehicle whereby a linear movement is compared with a threshold, and if the threshold is exceeded then a rotational movement is compared with a second threshold, if the second threshold is not exceeded the airbag is not triggered.

Disclosure of the invention

On this background, the present invention serves to present a method for the classification of a crash of a vehicle, furthermore a control device employing this method as well as finally a corresponding computer program product according to the independent claims. Advantageous embodiments result from the respective dependent claims and the following description.

According to the invention, there is effected a combined evaluation of rotatory and linear acceleration information, on the basis of which discrete crash scenarios may be recognized. Here, the central idea of the present invention is the determination of a universal feature of complex crash scenrios including both linear and rotatory alterations of movement.

The invention is based on the finding that a rotatory movement measured in the control device may be compared to a calculated deceleration, and that from this comparison, a point of an application of force to the vehicle may be ascertained. Subsequently, certain crash types may be allocated or precluded based on the detection of a distance of the point relative to a centre of rotation of the vehicle.

The invention enables a crash situation classification in consideration of rotatory and linear alterations of movement during the crash. This is made possible by a detection of the distance of the application of force from the centre of mass of the vehicle hit. Based thereon, a lateral "off zone" crash may be detected, that is a crash, in which the lateral crash point is located before the A pillar or after the C pillar.

The present invention provides a method for the classification of a crash of a vehicle, comprising: receiving information on a linear movement and information on a rotational movement of the vehicle via an interface; determining information on a crash point, based on a ratio of the linear movement and the rotational movement, the information on the crash point being suitable for differentiating between a crash in a central area and a crash in an outer area of the vehicle.

The crash may be a collision of the vehicle with an object, a body or another vehicle. The crash point may designate the location of the vehicle, at which a transmission of force occurs due to the crash. The crash point may serve to classify the crash. The classification may be utilized for triggering suitable occupant protection means, protection systems or protection devices of the vehicle. The central area and the outer area of the vehicle may relate to a passenger cell. For example, the central area may represent the area between the A pillar and the C pillar. Therefore, the crash may be an "in zone" crash when the crash point is located in the central area. Accordingly, the outer area may represent the area before the A pillar and behind the C pillar. Therefore, the crash may be an "off zone" crash, when the crash point is located in the outer area. The information on the linear movement and the information on the rotational movement may represent respective sensor signals or may be ascertained from sensor signals. The linear movement may be a linear acceleration or speed information, and the rotational movement may be information on a rotational acceleration or rotational speed. The ratio may be determined from the linear movement and the rotational movement by means of a calculation, an operation, a comparison or any other suitable method.

The linear movement may represent a lateral speed of the vehicle, and the rotational movement may represent a yaw rate of the vehicle. Specifically, the linear movement may comprise a lateral alteration of speed. These values may be ascertained by means of acceleration sensors and gyro or angular rate sensors arranged in the vehicle and/or may be determined from values ascertained by such sensors.

Here, the rotational movement may relate to a point of reference of the vehicle, and the linear movement may relate to a point of the vehicle different from the point of reference. For example, the point of reference may be a centre of mass or a centre of rotation of the vehicle. Therefore, the rotational movement may characterize a rotation of the vehicle on an axis running through the centre of mass. In contrast, the linear movement may characterize a lateral movement of a vehicle part located outside the centre of mass.

In order to determine the information on the crash point, the ratio of the linear movement and the rotational movement may be compared with at least one threshold value. In this manner, the crash point may be determined in a simple manner.

Here, the at least one threshold value may be dependent on a position of a dividing line between the central area and the outer area. Specifically, the threshold value may be dependent on a distance between the point of reference, that is e.g. the centre of mass, and the outer area. In this manner, via the threshold value, a differentiation may be made between a crash in the central area or the outer area of the vehicle.

The at least one threshold value may have a first value when the crash point may be allocated to a frontal area of the vehicle and may have a second value when the crash point may be allocated to a rear area of the vehicle. The first value may be different from the second value. In this manner, different dimensions of the central area in the front and rear areas of the vehicle may be accounted for.

Depending on a comparison of the ratio with a first threshold value, a determination may be made, whether the crash point is allocated to the central area, and depending on a comparison of the ratio with a second threshold value, a determination may be made, whether the crash point is allocated to the outer area. In this manner, by means of two given threshold values, a classification of the crash may be accomplished to the effect whether an impact is occurring in the central area or the outer area.

Furthermore, a comparison of direction between a direction of the linear movement and a direction of the rotational movement may be performed, and the information on the crash point may indicate, based on the comparison of direction, whether the crash point is located in a frontal area or in a rear area of the vehicle. The comparison of direction may be effected by means of a comparison of the signs of the linear and rotational movements.

The information on the crash point may be determined in dependence on a comparison of the linear movement with at least one limit value. In this manner, a validation of a crash severity may be accomplished. For example, it may be ensured that the determination of the crash point is not effected unless a characteristic of the linear movement suggests a crash. Here, the linear movement may comprise both a movement in the lateral direction and a movement in the longitudinal direction.

The inventive method may comprise a step of ascertaining whether the alteration of speed lies within a given interval, and the information on the crash point may be determined when the linear alteration of speed lies within the given interval. In this manner, a further validation of a crash severity may be accomplished.

The inventive method may also comprise a step or forming a window integral across a lateral acceleration of the vehicle, and the information on the crash point may be provided in dependence on the window integral. In this manner, a plausibilization of the yaw rate function may be effected.

The present invention further provides a control device configured to perform or implement the steps of the inventive method. This embodiment of the invention in the form of a control device also serves to achieve the object underlying the invention in a fast and efficient manner

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing the method of any one of the aforementioned embodiments, when the program for is executed on a control device.

In the following, the invention is exemplarily explained in detail by means of the accompanying drawings, in which:

Fig. 1    shows a flow chart of a first embodiment of the present invention;

Fig. 2     shows a schematic representation of a vehicle;

Fig. 3     shows a graphic representation of threshold values, according to an em- bodiment of the present invention;

Fig. 4     shows a graphic representation of threshold values, according to an em- bodiment of the present invention; and

Fig. 5     shows a graphic representation of further threshold values, according to an embodiment of the present invention.

In the Figs. below, like or similar elements may be provided with like or similar reference numbers, with a repeated description being dispensed with. In addition, the Figs. of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions.

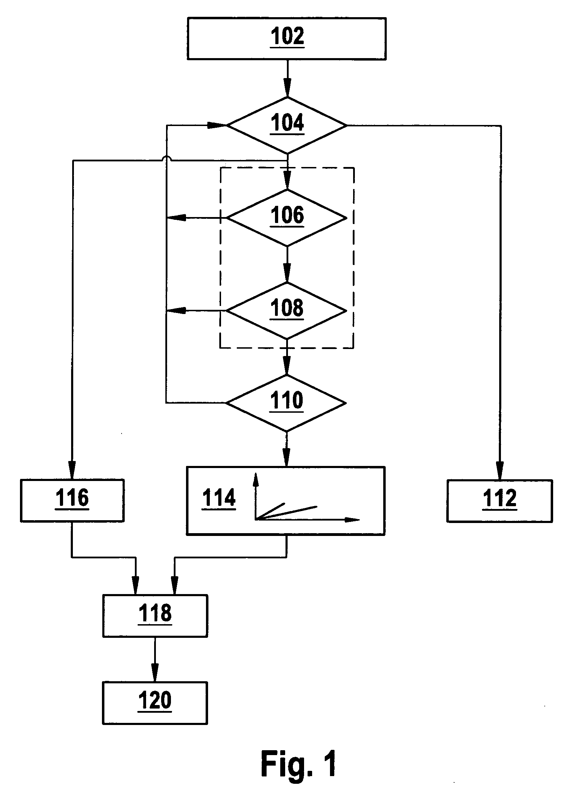

Fig. 1 shows a flow chart of a method for the classification of a crash of a vehicle, according to an embodiment of the present invention. At the beginning 102 of a detection of a crash in an outer area of the vehicle (off zone detection), information on a linear movement or a plurality of linear movements and information on a rotational movement or a plurality of rotational movements of the vehicle may be received. Lateral acceleration values and yaw acceleration values may be received, for example. If the method is executed in a control device, the information may be received via an interface of the control device. The information may be provided both by sensors arranged near or in the vehicle's centre of mass and by sensors distributed throughout the vehicle. From the information, further values may be ascertained, which are used in further steps of the inventive method. Further values may, for example, be ascertained by means of integration or derivation from the information received. Further information may also be received together with or in response to the execution of further method steps.

In plausibilization steps 104, 106, 108, the information received may be checked with respect to its relevance regarding a crash. This may include a comparison with given threshold values. If the information is classified as non-relevant, further evaluation of the information may be omitted.

For example, in step 104, a check may be made whether a start condition is fulfilled. If this is not the case, the execution of the method may be reset in a step 112. If the start condition is fulfilled, a validation of the crash severity (severity check) may be effected in the steps 106, 108.

In step 106, peripheral sensors in the y direction, that is with respect to the vehicle's transverse axis, may be measured for the validation of severe crashes. If a signal of the peripheral sensors in the y direction exceeds a threshold, it may be inferred therefrom that a crash between the A and C pillars or a crash at high speed outside this area is occurring. If the condition "PAS signal < threshold", for example, is fulfilled, the method may proceed with step 108. If the condition is not fulfilled, a return to step a 104 may be effected. PAS means Peripheral Acceleration Sensor.

In step 108, a further validation of severe crashes may be performed by means of a central sensor system. For this purpose, the accelerations in the x direction, that is with respect to the vehicle's longitudinal axis, and in the y direction of the vehicle may be observed. If one of the accelerations exceeds an applicable threshold, again a crash at high speed may be assumed. For the monitoring in the x direction, PASXY sensors may additionally be used in support of the central sensor. If the condition "AccX,Y signal < threshold "is fulfilled, for example, the method may proceed with step 110. If the condition is not fulfilled, a return to step 106 may be effected.

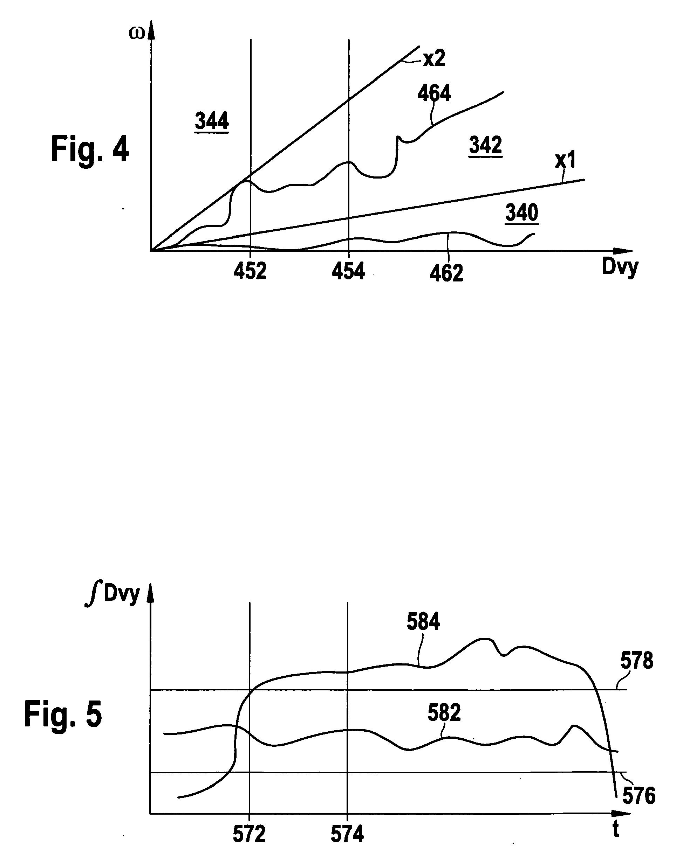

As described in closer detail by means of Fig. 4, in addition to the requests of the signals of the peripheral and central sensors, a window may be defined based on a calculated speed in the y direction (DvY) in step 110. According to this embodiment, the yaw rate is actually evaluated in the DvY window only. This limitation serves as a further validation of the crash severity. If e.g. the condition "(DvY < DvYmax) & (DvY > DvYmin)" is fulfilled, the yaw rate may be evaluated in a following step 114. If the condition is not fulfilled, a return to step 104 may be effected.

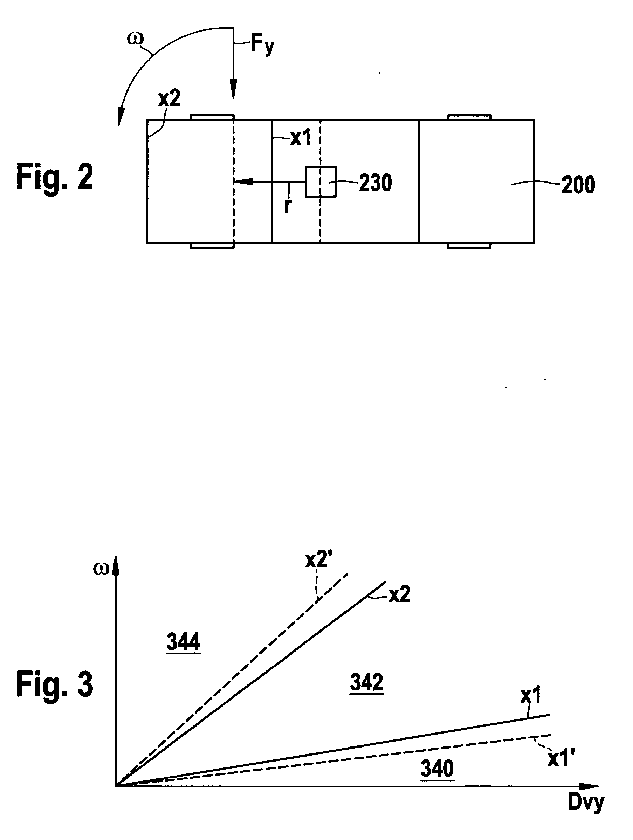

In step 114, an analysis of the rotational movement of the vehicle may be performed. For this purpose, the yaw rate may be set in relation to the speed in the y direction (DvY) and, as described in closer detail by means of Fig. 3, be compared to threshold values.

Based on step 104, a further check of the crash severity may be effected in a step 116. For this purpose, the window integral across the y acceleration may serve as a plausibilization of the yaw rate function, the y acceleration measured from the PAS B pillar, for example. As shown in Fig. 5, according to this embodiment, this window integral is to lie within a corridor. If the window integral is too high, the decision for an "off zone" crash may be inhibited.

To this end, an operation, e.g. an AND operation of output values of the steps 114, 116 may be performed in a step 118. In dependence thereon, an output signal in the form of an "off zone" flag indicating an "off zone" crash may be provided in a step 120.

Therefore, a decision whether a crash is an "off zone" crash may be reached by means of the inventive method.

If a crash is detected but not classified as an "off zone" crash, it may be an "in zone" crash. The information on the crash location may be utilized for a trigger decision regarding occupant protection means. Thus, the analysis of the rotational movement shown in Fig. 1 may, in combination with other classification methods, result in a trigger decision for various safety systems.

Fig. 2 shows a drawing of a vehicle subjected to an "off zone"-like application of force $F_y$. What is shown is a centre of mass 230 of the vehicle. To the front, a central area of the vehicle 200 is limited relative to a frontal outer area of the vehicle by a dividing line x1. The frontal outer area may correspond to the frontal "off zone" area of the vehicle and is limited, apart from the dividing line x1, by a frontal vehicle limit x2. A distance r states a space between the centre of mass 230 and a line extending across the vehicle starting from the point $F_y$ of the application of force. The point $F_y$ of the application of force may correspond to the crash point. Furthermore, a direction of a yaw rate w is shown.

According to the invention, the distance from the point $F_y$ of the application of force to the vehicle's centre of mass 230 is ascertained. Based on the location of the application of force $F_y$ relative to the centre of mass 230 of the respective vehicle 200, the crash point and the application of force to the vehicle 200 to be expected may be suggested.

If the force is directly applied to the passenger cell, a higher severity of injuries is to be reckoned with in the course of the crash than would be the case if the application of force were effected next to the passenger cell. In the latter case, the activation strategy for the triggering of restraint means should be adjusted.

In the following, the inventive approach is explained on the basis of a general functional description.

According to an embodiment, the function underlying the invention may detect, using the yaw rate signal and acceleration signals from the airbag control device as well as peripheral sensors (PAS = Peripheral Acceleration Sensor / UFS = Up front Sensor), whether a crash possibly occurring is taking place from the side between the A and C pillars or outside this defined area.

The physical fundament of the function and/or the invention is based on the following correlations, which are also shown in Fig. 2:

$$M = J_z \dot{\omega}_z$$

$$F \times r = J_z \dot{\omega}_z \qquad [1]$$

$$m a_y \times r = J_z \dot{\omega}_z$$

Integration over the time "t" yields:

$$Dv \times r = \frac{J_z}{m_z} \omega_z \qquad [1a]$$

$$Dv \times r = Dv_Y \cdot x_i \cdot e_{\omega_Z} \qquad [2]$$

$$\omega_Z = x \cdot \frac{m}{J_z} \cdot Dv_Y \rightarrow \omega_{threshold} \frac{1}{2} = x_{\frac{1}{2}} \cdot \frac{m}{J_z} \cdot Dv_Y \qquad [3]$$

M = torque
J = mass moment of inertia (vehicle)
m = mass
F = force
a = acceleration in y direction
r = distance of point of application of force to centre of mass of vehicle
ω = yaw rate

$\dot{\omega}$ = yaw acceleration

$x_i$ = distance markings in longitudinal direction for "off zone"

$x_i'$ = analog to $x_i$, but for the rear end of the vehicle

By means of Fig. 3, an evaluation of the yaw rate is described according to an embodiment of the present invention. What is shown is a diagram, in which the speed in the y direction DvY is plotted on the abscissa and the yaw rate $\omega$ is plotted on the ordinate. Furthermore, threshold straight lines x1, x2, x1', x2' are shown. Here, the threshold straight lines x1, x2 relate to the frontal area of the vehicle, and the threshold straight lines x1', x2' relate to the rear end area.

An area 340 arranged between the abscissa and the threshold straight lines x1 or x1', respectively, identifies an "in zone" area of the vehicle. An area 342 arranged between the threshold straight lines x1 or x1' and the threshold straight lines x2 or x2', respectively, identifies an "off zone" area of the vehicle. An area 344 arranged between the threshold straight lines x2 or x2', respectively, and the ordinate is designated as non-plausible with respect to the inventive evaluation.

Equation [3] yields a linear equation through the origin. Thus, in the case of a crash, the yaw rate measured is represented as an approximated straight line through the origin in the yaw rate/DvY diagram shown in Fig. 3. The slope of the straight line depends on the distance of the point of the application of force to the centre of mass of the vehicle. As the geometry of a vehicle is finite, the area 342 for "off zone" and the area 340 for "in zone" may thus be defined. These areas 340, 342 are designated with x1 or x2, respectively, for the frontal area and with x1' or x2', respectively, for the rear end area.

The differentiation between rear and front end may be performed by comparing the signs of the yaw rate and the acceleration in the y direction.

If a current yaw rate signal is below the threshold straight line x1 or x1' defining a lower limit or above the threshold straight line x2 or x2' defining an upper limit, an "off zone" crash is not present. However, if the yaw rate signal is between the threshold straight line x1 or x1' and the threshold straight line x2 or x2', respectively, an "off zone" crash may be detected.

Fig. 4 shows , in a manner analog to Fig. 3, a diagram in order to outline a separation of "off zone" crashes as compared to "in zone" crashes. In the diagram, again the speed in the y direction is plotted on the abscissa and the yaw rate $\omega$ is plotted on the ordinate. Exemplary the threshold straight lines x1, x2 are shown. Furthermore, two threshold straight lines 452, 454 are shown. The threshold straight line 452 marks a value DvYStart and the threshold straight line 454 marks a value DvYEnd. The values of the threshold straight lines 452, 454 may be given. Furthermore, waveforms of a first yaw rate signal 462 and a second yaw rate signal 464 are shown.

The first yaw rate signal 462 runs below the threshold straight line x1. Therefore, an "off zone" crash is not present. Instead, the crash may be an "in zone" crash. The second yaw rate signal 464 runs between the threshold straight line x1 and the threshold straight line x2. Therefore, an "off zone" crash may be detected when, in addition, the second yaw rate signal 464 is located within the defined threshold straight lines 452, 454.

Fig. 5 shows a drawing of a function of a PAS window integral plausibilization, which may be performed in step 116 of the flow chart shown in Fig. 1. What is shown is a diagram, in which the time t is plotted on the abscissa and the PAS window integral is plotted on the ordinate. In addition, limit values are shown, which define a counter start 572, a counter end 574, a lower limit 576 and an upper limit 578.

A course of a first window integral 582 runs within a corridor formed by the lower limit 576 and the upper limit 578 and may therefore point to an "off zone" crash. A course of a second window integral 584 runs at least temporarily above the upper limit 578 and may therefore be a sign of an "in zone" crash.

The inventive approach may be provided for e.g. control device embodiments, in which both rotation rate sensors and acceleration sensors are integrated in the respective rotation plane. According to the invention, the difficulties met in the crash classification of rotatory crashes are overcome. The difficulties overcome here lie in the determination of a clear crash feature for the determination of a suitable activation concept for restraint means in respectively complex crash situations. The inventive algorithm concept is therefore suitable for rotation rate supported algorithms in airbag systems. The inventive approach may be employed for the enabling of paths for yaw rate based algorithms.

The embodiments described are only exemplary and may be combined with one another. The method steps shown may be executed repeatedly and in an order other than described.

**Claims**

**1.** Method for the classification of a crash of a vehicle, comprising:

receiving information on a linear movement and information on a rotational movement of the vehicle via an interface;
determining (114) a ratio of the linear movement and the rotational movement; and

determining information on a crash point, based on the ratio of the linear movement and the rotational movement, the information on the crash point being suitable for differentiating between a crash in a central area (340) and a crash in an outer area (342) of the vehicle.

2. Method according to claim 1, in which the linear movement represents a lateral speed of the vehicle and the rotational movement represents a yaw rate of the vehicle.

3. Method according to any one of the preceding claims, in which the rotational movement relates to a point of reference (230) of the vehicle and the linear movement relates to a point of the vehicle different from the point of reference.

4. Method according to any one of the preceding claims, in which, for the determining of the information on the crash point, the ratio of the linear movement and the rotational movement is compared with at least one, threshold value ($x1$, $x2$, $x1'$, $x2'$),

5. Method according to claim 4, in which the at least one threshold value ($x1$, $x2$, $x1'$, $x2'$) is dependent on a position of a dividing line between the central area and the outer area.

6. Method according to claims 4 or 5, in which the at least one threshold value ($x1$, $x2$, $x1'$, $x2'$) has a first value when the crash point may be allocated to a frontal area of the vehicle and has a second value when the crash point may be allocated to a rear area of the vehicle.

7. Method according to any one of the preceding claims, in which, in dependence on a comparison of the ratio with a first threshold value ($x1$ $x1'$), a determination is made whether the crash point is allocated to the central area, and, in dependence on a comparison of the ratio with a second threshold value ($x2$, $x2'$), a determination is made whether the crash point is allocated to the outer area.

8. Method according to any one of the preceding claims, in which a comparison of direction between a direction of the linear movement and a direction of the rotational movement is performed and the information on the crash point indicates, in dependence on the comparison of direction, whether the crash point is located in a frontal area or in a rear area of the vehicle.

9. Method according to any one of the preceding claims, in which the information on the crash point is determined in dependence on a comparison of the linear movement with at least one limit value (452, 454, 576, 578).

10. Method according to any one of claims 2 to 9, with a step of ascertaining whether the alteration of speed lies within a given interval (452, 454), and in which the information on the crash point is determined when the linear alteration of speed lies within the given interval.

11. Method according to any one of the preceding claims, with a step of forming a window integral across a lateral acceleration of the vehicle, and in which the information on the crash point is provided in dependence on the window integral.

12. Control device, configured to perform the steps of a method according to any one of claims 1 to 11 and comprising at least one interface for receiving information on a linear movement and information on a rotational movement of the vehicle and
at least one ASIC for determining (114) a ratio of the linear movement and the rotational movement and
for determining information on a crash point, based on the ratio of the linear movement and the rotational movement, the information on the crash point being suitable for differentiating between a crash in a central area (340) and a crash in an outer area (342) of the vehicle.

13. Computer program product with a program code stored on a machine readable carrier, for performing the method according to any one of claims 1 to 11, when the program is executed on a control device.

**Patentansprüche**

1. Verfahren für die Klassifikation eines Aufpralls eines Fahrzeugs, wobei das Verfahren Folgendes umfasst:

Empfangen von Informationen über eine geradlinige Bewegung und von Informationen über eine Drehbewegung des Fahrzeugs über eine Schnittstelle;

Bestimmen (114) eines Verhältnisses der geradlinigen Bewegung und der Drehbewegung; und

Bestimmen von Informationen über einen Aufprallpunkt auf der Basis des Verhältnisses der geradlinigen Bewegung und der Drehbewegung, wobei die Informationen über den Aufprallpunkt geeignet sind, um zwischen einem Aufprall in einem zentralen Bereich (340) und einem Aufprall in einem äußeren Bereich (342) des Fahrzeugs zu unterscheiden.

2. Verfahren nach Anspruch 1, wobei die geradlinige Bewegung eine Quergeschwindigkeit des Fahrzeugs und die Drehbewegung eine Giergeschwindigkeit des Fahrzeugs darstellen.

3. Verfahren nach einem der vorhergehenden Ansprüche, wobei die Drehbewegung sich auf einen Referenzpunkt (230) des Fahrzeugs bezieht und die geradlinige Bewegung sich auf einen Punkt des Fahrzeugs bezieht, der sich von dem des Referenzpunktes unterscheidet.

4. Verfahren nach einem der vorhergehenden Ansprüche, wobei für das Bestimmen der Informationen über den Aufprallpunkt das Verhältnis der geradlinigen Bewegung zu der Drehbewegung mit mindestens einem Schwellenwert (x1, x2, x1', x2') verglichen wird.

5. Verfahren nach Anspruch 4, wobei mindestens einer der Schwellenwerte (x1, x2, x1', x2') abhängig ist von einer Position einer Trennlinie zwischen dem zentralen Bereich und dem äußeren Bereich.

6. Verfahren nach Anspruch 4 oder 5, wobei mindestens einer der Schwellenwerte (x1, x2, x1', x2') einen ersten Wert aufweist, wenn der Aufprallpunkt einem vorderen Bereich des Fahrzeugs zugeordnet werden kann, und einen zweiten Wert aufweist, wenn der Aufprallpunkt einem hinteren Bereich des Fahrzeugs zugeordnet werden kann.

7. Verfahren nach einem der vorhergehenden Ansprüche, wobei in Abhängigkeit von einem Vergleich des Verhältnisses mit einem ersten Schwellenwert (x1, x1') eine Bestimmung vorgenommen wird, ob der Aufprallpunkt der zentralen Fläche zugeordnet wird, und wobei in Abhängigkeit von einem Vergleich des Verhältnisses mit einem zweiten Schwellenwert (x2, x2') eine Bestimmung vorgenommen wird, ob der Aufprallpunkt der äußeren Fläche zugeordnet wird.

8. Verfahren nach einem der vorhergehenden Ansprüche, wobei ein Richtungsvergleich zwischen einer Richtung der geradlinigen Bewegung und einer Richtung der Drehbewegung durchgeführt wird und wobei die Informationen über den Aufprallpunkt in Abhängigkeit von dem Richtungsvergleich anzeigen, ob der Aufprallpunkt in einem vorderen Bereich oder in einem hinteren Bereich des Fahrzeugs liegt.

9. Verfahren nach einem der vorhergehenden Ansprüche, wobei die Informationen über den Aufprallpunkt in Abhängigkeit von einem Vergleich der geradlinigen Bewegung mit mindestens einem Grenzwert (452, 454, 576, 578) bestimmt werden.

10. Verfahren nach einem der Ansprüche 2 bis 9 mit einem Schritt des Ermittelns, ob die Änderung der Geschwindigkeit innerhalb eines gegebenen Intervalls (452, 454) liegt, und wobei die Informationen über den Aufprallpunkt bestimmt werden, wenn die geradlinige Änderung der Geschwindigkeit innerhalb des gegebenen Intervalls liegt.

11. Verfahren nach einem der vorhergehenden Ansprüche mit einem Schritt des Bildens eines Fensterintegrals über eine Querbeschleunigung des Fahrzeugs und wobei die Informationen über den Aufprallpunkt in Abhängigkeit von dem Fensterintegral bereitgestellt werden.

12. Steuervorrichtung, die konfiguriert ist, die Schritte eines Verfahrens nach einem der vorhergehenden Ansprüche 1 bis 11 durchzuführen, und die

mindestens eine Schnittstelle zum Empfangen von Informationen über eine geradlinige Bewegung und von Informationen über eine Drehbewegung des Fahrzeugs umfasst und

mindestens einen ASIC zum Bestimmen (114) eines Verhältnisses der geradlinigen Bewegung zu der Drehbewegung und

zum Bestimmen von Informationen über einen Aufprallpunkt auf der Basis des Verhältnisses der geradlinigen Bewegung zu der Drehbewegung aufweist, wobei die Informationen über den Aufprallpunkt geeignet sind, um zwischen einem Aufprall in einem zentralen Bereich (340) und einem Aufprall in einem äußeren Bereich (342) des Fahrzeugs zu unterscheiden.

**13.** Computerprogramm-Produkt mit einem Programmcode, der auf einem maschinenlesbaren Träger gespeichert ist, um das Verfahren nach einem der Ansprüche 1 bis 11 durchzuführen, wenn das Programm auf einer Steuervorrichtung ausgeführt wird.

**Revendications**

**1.** Procédé pour la classification d'une collision d'un véhicule comprenant les étapes suivantes :

recevoir des informations sur un mouvement linéaire et des informations sur un mouvement de rotation du véhicule par l'intermédiaire d'une interface ;
déterminer (114) un rapport du mouvement linéaire sur le mouvement de rotation ; et
déterminer des informations sur le point de collision sur la base du rapport du mouvement linéaire sur le mouvement de rotation, les informations sur le point de collision étant appropriées pour faire la différence entre une collision au niveau d'une zone centrale (340) et une collision au niveau d'une zone externe (342) du véhicule.

**2.** Procédé selon la revendication 1, dans lequel le mouvement linéaire représente une vitesse latérale du véhicule et le mouvement de rotation représente un taux de lacet du véhicule.

**3.** Procédé selon l'une quelconque des revendications précédentes, dans lequel le mouvement de rotation se rapporte à un point de référence (230) du véhicule et le mouvement linéaire se rapporte à un point du véhicule différent du point de référence.

**4.** Procédé selon l'une quelconque des revendications précédentes, dans lequel, pour la détermination des informations sur le point de collision, le rapport du mouvement linéaire sur le mouvement de rotation est comparé à au moins une valeur seuil (x1, x2, x1', x2').

**5.** Procédé selon la revendication 4, dans lequel l'au moins une valeur seuil (x1, x2, x1', x2') dépend d'une position d'une ligne de démarcation entre la zone centrale et la zone externe.

**6.** Procédé selon la revendication 4 ou la revendication 5, dans lequel l'au moins une valeur seuil (x1, x2, x1', x2') a une première valeur lorsque le point de collision peut être alloué à une zone frontale du véhicule et a une seconde valeur lorsque le point de collision peut être alloué à une zone arrière du véhicule.

**7.** Procédé selon l'une quelconque des revendications précédentes, dans lequel, en fonction d'une comparaison du rapport avec une première valeur seuil (x1, x1'), une détermination est effectuée quant au fait que le point de collision soit alloué à la zone centrale, et, en fonction d'une comparaison du rapport avec une seconde valeur seuil (x2, x2'), une détermination est effectuée quant au fait que le point de collision soit alloué à la zone externe.

**8.** Procédé selon l'une quelconque des revendications précédentes, dans lequel une comparaison des directions entre une direction du mouvement linéaire et une direction du mouvement de rotation est effectuée, et les informations sur le point de collision indiquent, en fonction de la comparaison de direction, si le point de collision est situé dans une zone frontale ou dans une zone arrière du véhicule.

**9.** Procédé selon l'une quelconque des revendications précédentes, dans lequel les informations sur le point de collision sont déterminées en fonction d'une comparaison du mouvement linéaire avec au moins une valeur limite (452, 454, 576, 578).

**10.** Procédé selon l'une quelconque des revendications 2 à 9, comprenant une étape évaluant si l'altération de la vitesse se situe dans un intervalle donné (452, 454), et dans lequel les informations sur le point de collision sont déterminées lorsque l'altération linéaire de la vitesse se situe dans l'intervalle donné.

**11.** Procédé selon l'une quelconque des revendications précédentes, comprenant une étape comprenant de procéder à une intégration sur une fenêtre de l'accélération latérale du véhicule, et dans lequel les informations sur le point de collision sont fournies en fonction de l'intégration sur la fenêtre.

**12.** Dispositif de commande configuré pour exécuter les étapes d'un procédé selon l'une quelconque des revendications 1 à 11, et
comprenant au moins une interface pour recevoir des informations sur un mouvement linéaire et des informations sur un mouvement de rotation du véhicule, et
au moins un ASIC pour déterminer (114) un rapport du mouvement linéaire et du mouvement de rotation et pour déterminer des informations sur un point de collision sur la base du rapport du mouvement linéaire sur le mouvement de rotation, les informations sur le point de collision étant appropriées pour faire la différence entre une collision au niveau d'une zone centrale (340) et une collision au niveau d'une zone externe (342) du véhicule.

**13.** Produit programme informatique avec un code de programme stocké sur un support lisible par une machine pour exécuter le procédé selon l'une quelconque des revendications 1 à 11, dans lequel le programme est exécuté sur un dispositif de commande.

Fig. 1

## Fig. 2

ω

Fy

x2

x1

230

r

200

## Fig. 3

ω

x2'

x2

344

342

x1

x1'

340

Dvy

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008048159 A

- GB 2442987 A